(19) Europäisches Patentamt
European Patent Office
Office européen des brevets

(11) EP 3 595 155 A1

(12) **EUROPÄISCHE PATENTANMELDUNG**

(43) Veröffentlichungstag:
**15.01.2020 Patentblatt 2020/03**

(51) Int Cl.:
***H02M 3/158*** *(2006.01)* *H02M 1/00* *(2006.01)*

(21) Anmeldenummer: **18182567.0**

(22) Anmeldetag: **10.07.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Sellemond, Alexander**
**80799 München (DE)**
• **Bachmann, Christian**
**80686 München (DE)**
• **Bergmann, Dominik**
**83679 Sachsenkam (DE)**
• **Pais, Guillaume**
**81667 München (DE)**
• **Zöls, Wolfgang**
**81249 München-Lochhausen (DE)**

(54) **STEUEREINHEIT ZUM BEREITSTELLEN EINER VARIABLEN AUSGANGSSPANNUNG AM AUSGANG EINER RESONANT SCHALTENDEN BRÜCKENSCHALTUNG**

(57)     Die Erfindung beschreibt eine Steuereinheit zum Bereitstellen einer variablen Ausgangsspannung ($U_{out}$) am Ausgang einer resonant schaltenden Brückenschaltung. Die Brückenschaltung umfasst eine erste und eine zweite Halbbrücke (10, 20) mit jeweils zwei in Serie verschalteten steuerbaren Schaltelementen (11, 12; 21, 22) sowie eine Resonanzschaltung mit einer Induktivität (30), die zwischen einem ersten, die Schaltelemente der ersten Halbbrücke (10) verbinden Knotenpunkt (15) und einem zweiten, die Schaltelemente der zweiten Halbbrücke (10) verbinden Knotenpunkt (25), verschaltet ist, sowie mit einem ersten und einem zweiten Kondensator (14 24). Die Steuereinheit ist dazu ausgebildet, einen Schaltvorgang, bei dem ein Paar an Schaltelementen (11, 22 oder 12, 21), das ein High-Side-Schaltelement der ersten oder zweiten Halbbrücke (10, 20) und ein Low-Side-Schaltelement der jeweils anderen Halbbrücke (20, 10) umfasst, ein- oder ausgeschaltet wird, durch Erzeugung entsprechender Steuersignale durchzuführen. Schließlich ist die Steuereinheit dazu ausgebildet, einen zeitlichen Versatz der Schaltzeitpunkte des Schaltvorgangs für die Schaltelemente des Paars an Schaltelementen (11, 22 oder 12, 21) zu ermitteln und zur Erzeugung der Steuersignale zu verarbeiten, wobei der zeitliche Versatz so bestimmt wird, dass die Energie in der Resonanzschaltung genau so groß ist, dass bei einem Umschwingvorgang der erste und der zweite Kondensator (14, 24) vollständig umgeladen werden.

FIG 1

EP 3 595 155 A1

**Beschreibung**

Die Erfindung betrifft eine Steuereinheit und ein Verfahren zum Bereitstellen einer variablen Ausgangsspannung am Ausgang einer resonant schaltenden Brückenschaltung.

Ein Umrichter wird als resonant schaltend bezeichnet, wenn er durch ein Schwingkreis-ähnliches Prinzip (LC-Schwingkreis), ein spannungs- oder stromfreies Ein- und Ausschalten seiner steuerbaren Schaltelemente ermöglicht. Bei deren Schalten kommt es im Wesentlichen auf das exakte Timing an. Es gibt genau einen definierten Zeitpunkt pro Schaltperiode, zu dem ein spannungsfreies Einschalten des Schaltlelements eines Umrichters möglich ist.

Resonant schaltende Umrichter können im Normalfall nur in einem definierten Arbeitspunkt optimal arbeiten. Unter einem sog. "vollresonanten" Betrieb einer Schaltung versteht man, dass alle in einem Umrichter enthaltenen Leistungsschalter zum optimalen Zeitpunkt ein- bzw. ausgeschaltet werden können. Unter einem "teilresonanten" Prinzip versteht man, dass nur ein Teil der verwendeten Leistungsschalter zum optimalen Zeitpunkt ein- oder ausgeschaltet (allgemein: geschaltet) werden kann. Der optimale Zeitpunkt für das resonante Schalten bezieht sich dabei im Wesentlichen auf den Einschaltzeitpunkt. Der Ausschaltzeitpunkt ist von geringerer Bedeutung, da eine zeitliche Verschiebung dessen keine nennenswerten Änderungen in der Schaltcharakteristik mit sich bringt.

Unter "quasi-resonanten" Schaltvorgängen versteht man ein Einschalten des Leistungsschalters im Strom-Nulldurchgang, jedoch nicht im Spannungs-Nulldurchgang. Durch quasi-resonante Schaltvorgänge entstehen unerwünschte Verluste durch die resistive Entladung einer Restenergiemenge in einem Resonanzkondensator sowie unerwünschte elektromagnetische Störungen durch hohe Spannungs- und Stromgradienten im Schaltzeitpunkt.

Bei einer Anwendung, bei der eine resonant schaltende Umrichterschaltung dazu ausgebildet sein muss, variable Ein- oder Ausgangsspannungsbereiche abzudecken, wie das beispielsweise beim Laden einer großen kapazitiven Last, z.B. einem gestapelten piezoelektrischer Aktuator, der Fall ist, wird die Umrichterschaltung zwangsweise in Betriebspunkten betrieben, an denen lediglich eine quasi-resonante Schaltcharakteristik möglich ist. Ein idealer resonanter Schaltvorgang ist hier lediglich in einem Arbeitspunkt möglich. Bei einem piezoelektrischen Aktuator ist es ggf. erforderlich, die Ausgangsspannung je nach Ladezustand des piezoelektrischen Aktuators von Null bis zur maximalen Piezospannung am Ausgang der Umrichterschaltung zu variieren. Ist die Ausgangsspannung der Umrichterschaltung unterhalb einer halben Eingangsspannung, so ist in einem Resonanznetzwerk nicht genug Energie gespeichert, um einen Resonanzkondensator vollständig umzuladen. Der Nulldurchgang der Spannung an einem Leistungsschalter kann damit nicht erreicht werden, wodurch der Schalter unter ungünstigen Verhältnissen einschalten muss. Steigt demgegenüber die am Ausgang der Umrichterschaltung anliegende Spannung auf einen Wert, der größer als die halbe Eingangsspannung ist, so ist in der Oszillation genug Energie, um den Resonanzkondensator vollständig umzuladen.

Ein ähnliches Problem ergibt sich beim Einsatz einer Umrichterschaltung in Vollbrückentopologie (sog. Vier-Quadranten-Buck-Boost-Topologie). Bei dieser Umrichterschaltung muss das Verhältnis von Eingangsspannung zur Ausgangsspannung konstant bleiben, um einen voll resonant schaltenden Betriebsmodus zu erreichen. Da die in der Resonanzschaltung enthaltenen Kapazitätswerte fest sind und ein vollresonantes Schalten möglich ist, wenn im Umschwingvorgang eine genau definierte Energiemenge vorhanden ist, ist bei einer Abweichung des Spannungsverhältnisses von Eingangsspannung zu Ausgangsspannung nur mehr ein teilresonanter Betrieb möglich. Muss die Umrichterschaltung in der Lage sein, variable Ein- und Ausgangsspannungsbereiche abzudecken, so kommt es beim Umschwingvorgang des Resonanznetzwerks (der Resonanzschaltung) bei einem abweichenden Spannungsverhältnis zu unerwünschten Spannungsüberhöhungen oder zu quasi-resonanten Schaltvorgängen.

Bei Spannungsüberhöhungen kommt es zu Ausgleichsvorgängen, was Verluste mit sich bringt. Bei quasi-resonanten Schaltvorgängen treten unerwünscht hohe Stromgradienten in den Schaltelementen auf, die einerseits Verluste und andererseits EMV-Probleme mit sich bringen.

Die Verwendung einer resonant schaltenden Umrichterschaltung würde bessere EMV-Eigenschaften und einen geringfügig besseren Wirkungsgrad mit sich bringen. Eine Topologie, die in bestimmten Arbeitsbereichen jedoch nur quasi-resonant schalten kann, macht die gewonnenen Vorteile in den voll-resonanten Arbeitspunkten jedoch schnell wieder zunichte, wodurch sich ein Einsatz einer resonant schaltenden Vollbrücke (Vier-Quadranten-Buck-Boost-Topologie) für die Ansteuerung von Verbrauchern mit variabler Eingangsspannung in der Vergangenheit nicht gelohnt hat.

Es ist der Aufgabe der vorliegenden Erfindung, eine Steuereinheit und ein Verfahren bereitzustellen, welche eine variable Ausgangsspannung am Ausgang einer resonant schaltenden Brückenschaltung, insbesondere einer Vollbrückenschaltung in Vier-Quadranten-Buck-Boost-Topologie, ermöglichen.

Diese Aufgaben werden gelöst durch eine Steuereinheit gemäß den Merkmalen des Patentanspruchs 1 und ein Verfahren gemäß den Merkmalen des Patentanspruchs 10. Vorteilhafte Ausgestaltungen ergeben sich aus den abhängigen Patentansprüchen.

Es wird eine Steuereinheit zum Bereitstellen einer variablen Ausgangsspannung am Ausgang einer resonant schaltenden Brückenschaltung vorgeschlagen. Die Brückenschaltung umfasst eine erste Halbbrücke, eine zweite Halbbrücke und eine Resonanzschaltung. Die Brückenschaltung stellt eine Vollbrückenschaltung dar, welche, wie aus der nachfolgenden Beschreibung deutlich werden wird, in Vier-Quadranten-Buck-Boost-Topologie ausgebildet ist.

Die erste Halbbrücke umfasst ein erstes und ein zweites steuerbares Schaltelement, die in Serienschaltung zwischen einem ersten und einem zweiten Eingangsanschluss verschaltet sind, zwischen denen eine Eingangsspannung anliegt. Das erste steuerbare Schaltelement, das mit dem ersten Eingangsanschluss, an dem eine Versorgungsspannung anliegt, verschaltet ist, stellt im Rahmen der vorliegenden Beschreibung ein sog. High-Side-Schaltelement dar. Das zweite Schaltelement, das mit dem zweiten Eingangsanschluss, das mit einem Bezugspotential gekoppelt ist, stellt ein Low-Side-Schaltelement dar.

Die zweite Halbbrücke umfasst ein drittes und ein viertes steuerbares Schaltelement, die in Serienschaltung zwischen einem ersten und einem zweiten Ausgangsanschluss verschaltet sind, zwischen denen die Ausgangsspannung zur Ansteuerung eines spannungsgesteuerten Verbrauchers, z.B. eines piezoelektrischen Aktuators, anliegt. Das dritte steuerbare Schaltelement, das mit dem ersten Ausgangsanschluss verbunden ist, stellt ein High-Side-Schaltelement der zweiten Halbbrücke dar. Das vierte steuerbare Schaltelement, das mit dem zweiten Ausgangsanschluss, das mit einem Bezugspotential beaufschlagt ist, verbunden ist, stellt ein Low-Side-Schaltelement der zweiten Halbbrücke dar.

Das Bezugspotential, das an dem zweiten Eingangsanschluss anliegt, und das Bezugspotential, das an dem zweiten Ausgangsanschluss anliegt, können das gleiche Bezugspotential sein. Mit anderen Worten können der zweite Eingangsanschluss und der zweite Ausgangsanschluss unmittelbar miteinander verbunden und damit auf gleichen Potentialen liegen.

Die Resonanzschaltung (auch als Resonanznetzwerk bezeichnet) umfasst eine Induktivität, die zwischen einem ersten Knotenpunkt, der das erste und das zweite steuerbare Schaltelement miteinander verbindet, und einem zweiten Knotenpunkt, der das dritte und das vierte steuerbare Schaltelement miteinander verbindet, verschaltet ist. Die Resonanzschaltung umfasst ferner einen ersten Kondensator, der zwischen dem ersten Knotenpunkt und dem zweiten Eingangsanschluss verschaltet ist. Die Resonanzschaltung umfasst ferner einen zweiten Kondensator, der zwischen dem zweiten Knotenpunkt und dem zweiten Ausgangsanschluss verschaltet ist. Der erste und der zweite Kondensator werden auch als Resonanzkondensatoren bezeichnet.

Die Steuereinheit ist dazu ausgebildet, einen Schaltvorgang, bei dem ein Paar an Schaltelementen, dass ein High-Side-Schaltelement der ersten oder zweiten Halbbrücke und ein Low-Side-Schaltelement der jeweils anderen Halbbrücke umfasst, ein- oder ausgeschaltet wird, durch Erzeugung entsprechender Steuersignale durchzuführen. Die Steuereinheit ist weiter dazu ausgebildet, einen zeitlichen Versatz der Schaltzeitpunkte des Schaltvorgangs für die Schaltelemente des Paars an Schaltelementen zu ermitteln und zur Erzeugung der Steuersignale zu verarbeiten, wobei der zeitliche Versatz so bestimmt wird, dass die Energie in der Resonanzschaltung genau so groß ist, dass bei einem Umschwingvorgang der erste und der zweite Kondensator vollständig umgeladen werden.

Durch die zeitlich versetzte Ansteuerung der jeweiligen High-Side- und Low-Side-Schaltelemente der ersten und der zweiten Halbbrücke ist es möglich, einen vollresonanten Betrieb der Brückenschaltung unter beliebigen Ein- und Ausgangsspannungsverhältnissen zu erzielen. Ermöglicht wird es dadurch, dass der zeitliche Versatz der ersten und der zweiten Halbbrücke so berechnet wird, dass die Energie im Resonanzkreis genau so groß ist, um beim Umschwingvorgang beide Seiten des Resonanzkreises vollständig umzuladen.

Die erfindungsgemäße Steuereinheit ermöglicht die Reduzierung von Schaltverlusten und EMV-Emissionen. In den Arbeitspunkten, in denen im Vergleich zu einer herkömmlichen resonanten Ansteuerung auch vollresonant gearbeitet werden kann, besteht der zusätzliche Vorteil eines geringeren Effektivstroms (RMS-Strom) in den Dioden der steuerbaren Schaltelemente und in einem Eingangskondensator aufgrund der unterschiedlichen Energieniveaus am Eingang und Ausgang der Brückenschaltung.

Gemäß einer zweckmäßigen Ausgestaltung ist die Steuereinheit dazu ausgebildet, die Größe des zeitlichen Versatzes in Abhängigkeit der zu erzielenden Ausgangsspannung zu bestimmen. Mit anderen Worten bedeutet dies, dass in Abhängigkeit der zu erzielenden Ausgangsspannung zur Ansteuerung des spannungsgesteuerten Verbrauchers als Eingangsgröße die Größe des zeitlichen Versatzes als Ausgangsgröße bestimmt wird, um basierend auf dem ermittelten Ergebnis die Erzeugung der Steuersignale vorzunehmen.

Die Steuereinheit ist ferner dazu ausgebildet, hierzu folgende Gleichung zu erfüllen:

$$C_{res\_in}U_{15}^2 - L_{Main}I_{Main}^2 = C_{res\_out}U_{out}^2,$$

wobei in dieser Gleichung $C_{res\_in}$ die Kapazität des ersten Kondensators, $C_{res\_out}$ die Kapazität des zweiten Kondensators, $U_{15}$ die am ersten Knotenpunkt anliegende Spannung, $U_{out}$ die Ausgangsspannung, $L_{main}$ die Induktivität der Induktivität, und $I_{main}$ der durch die Induktivität fließende Strom sind.

Diese Gleichung resultiert aus dem Energieerhaltungssatz. Ist die Energie im Schwingkreis (linke Seite der Gleichung) gleich groß wie die notwendige Energie zum Umladen der gegenüberliegenden Resonanzkapazität, dann wird das entsprechende steuerbare Schaltelement geöffnet und ein Umladen zugelassen. Sollte die Ausgangsspannung die benötigte Mindestausgangsspannung für das Überwinden des quasi-resonanten Bereichs überwinden, so ist dies vorteilhaft, da die überschüssige Energie des ausgangsseiteigen Resonanzkondensators beim Umladen nicht durch die antiparallelen Dioden an dem steuerbaren Schaltelement auf der Eingangsseite in den eingangsseitigen Kondensator zurückgeladen werden muss. In diesen genannten Arbeitspunkten kann das Modulationsverfahren dadurch den Effektivstrom durch die Dioden reduzieren. Insbesondere werden quasi-resonante Schaltvorgänge bei geringeren Ausgangsspannungen vermieden.

Eine weitere zweckmäßige Ausgestaltung sieht vor, dass die Steuereinheit dazu ausgebildet ist, einen Strommesswert zu empfangen, der dem durch die Induktivität fließenden Strom entspricht. Dabei ist es bevorzugt, wenn die Strommessung mit einer sehr hohen zeitlichen Auflösung in der Induktivität erfolgt, da dieser Wert entscheidend für die Berechnung des zeitlichen Versatzes ist.

Alternativ ist ein rechnerischer Weg möglich. Hierzu ist die Steuereinheit dazu ausgebildet, einen Nulldurchgang des durch die Induktivität fließenden Stroms zu ermitteln und die oben stehende Gleichung des in der Brückenschaltung vorliegenden Schwingkreises unter Berücksichtigung des ermittelten zeitlichen Versatzes zu lösen.

Eine weitere zweckmäßige Ausgestaltung sieht vor, dass die Kapazität des zweiten Kondensators größer ist als die Kapazität des ersten Kondensators. Dadurch kann die Steuereinheit die Brückenschaltung auch bei sehr niedrigen Ausgangsspannungen betreiben, da dann in der zweiten Kapazität (Ausgangskapazität) genug Energie gespeichert ist, um den eingangsseitigen Resonanzkondensator (erste Kapazität) auf das Eingangsspannungsniveau aufzuladen.

Es ist weiterhin zweckmäßig, wenn die Steuereinheit dazu ausgebildet ist, das High-Side-Schaltelement der zweiten Halbbrücke zeitlich nach dem Low-Side-Schaltelement der ersten Halbbrücke sperrend zu schalten, unter der Bedingung, dass die Ausgangsspannung kleiner als eine vorgegebene Mindestspannung ist. Es ist weiterhin zweckmäßig, wenn die Steuereinheit dazu ausgebildet ist, das High-Side-Schaltelement der ersten Halbbrücke und das Low-Side-Schaltelement der zweiten Halbbrücke etwa zeitgleich leitend zu schalten, unter der Bedingung, dass die Ausgangsspannung kleiner als eine vorgegebene Mindestspannung ist.

Die vorgegebene Mindestspannung $U_{out\_min}$ ist gegeben durch:

$$U_{out\_min} = \frac{U_{In}}{2} - \sqrt{\frac{C\_res\_in}{C\_res\_out}} U_{Out},$$

worin $U_{In}$ die Eingangsspannung ist.

Es wird ferner ein Verfahren zum Bereitstellen einer variablen Ausgangsspannung am Ausgang einer resonant schaltenden Brückenschaltung vorgeschlagen. Die Brückenschaltung ist, wie oben beschrieben, ausgebildet.

In diesem Verfahren wird durch Erzeugung entsprechender Steuersignale ein Schaltvorgang, bei dem ein Paar an Schaltelementen, das ein High-Side-Schaltelement der ersten oder zweiten Halbbrücke und ein Low-Side-Schaltelement der jeweils anderen Halbbrücke umfasst, durch Ein- oder Ausschalten bewirkt. Ferner wird ein zeitlicher Versatz der Schaltzeitpunkte des Schaltvorgangs für die Schaltelemente des Paars an Schaltelementen ermittelt und zur Erzeugung der Steuersignale verarbeitet, wobei der zeitliche Versatz so bestimmt wird, dass die Energie in der Resonanzschaltung genau so groß ist, dass bei einem Umschwingvorgang der erste und der zweite Kondensator vollständig umgeladen werden.

Das Verfahren weist die gleichen Vorteile auf, wie diese vorstehend in Verbindung mit der erfindungsgemäßen Steuereinheit beschrieben wurden.

Gemäß einer weiteren zweckmäßigen Ausgestaltung wird die Größe des zeitlichen Versatzes in Abhängigkeit der zu erzielenden Ausgangsspannung bestimmt.

Eine weitere zweckmäßige Ausgestaltung des Verfahrens sieht vor, dass die folgende Gleichung erfüllt ist:

$$C_{res\_in} U_{15}^2 - L_{Main} I_{Main}^2 = C_{res\_out} U_{out}^2,$$

wobei in dieser Gleichung $C_{res\_in}$ die Kapazität des ersten Kondensators, $C_{res\_out}$ die Kapazität des zweiten Kondensators, $U_{15}$ die am ersten Knotenpunkt anliegende Spannung, $U_{out}$ die Ausgangsspannung, $L_{main}$ die Induktivität der Induktivität, und $I_{main}$ der durch die Induktivität fließende Strom sind.

Eine weitere zweckmäßige Ausgestaltung sieht vor, dass ein Strommesswert empfangen wird, der dem durch die Induktivität fließenden Strom entspricht.

Eine weitere zweckmäßige Ausgestaltung sieht vor, dass ein Nulldurchgang des durch die Induktivität fließenden Stroms ermittelt wird und die Differentialgleichung des in der Brückenschaltung vorliegenden Schwingkreises unter Berücksichtigung des ermittelten zeitlichen Versatzes gelöst wird.

Eine weitere zweckmäßige Ausgestaltung sieht vor, dass das High-Side-Schaltelement der zweiten Halbbrücke zeitlich nach dem Low-Side-Schaltelement der ersten Halbbrücke sperrend geschaltet wird, unter der Bedingung, dass die Ausgangsspannung kleiner als eine vorgegebene Mindestspannung ist.

Es ist weiterhin zweckmäßig, dass das High-Side-Schaltelement der ersten Halbbrücke und das Low-Side-Schaltelement der zweiten Halbbrücke etwa zeitgleich leitend geschaltet werden, unter der Bedingung, dass die Ausspannung kleiner als eine vorgegebene Mindestspannung ist.

Es ist weiterhin zweckmäßig, wenn die vorgegebene Mindestspannung $U_{out\_min}$ ist gegeben durch:

$$U_{out\_min} = \frac{U_{In}}{2} - \sqrt{\frac{C\_res\_in}{C\_res\_out}} U_{Out},$$

worin $U_{In}$ die Eingangsspannung ist.

Es wird ferner ein Computerprogrammprodukt vorgeschlagen, dass direkt in den internen Speicher eines digitalen Computers geladen werden kann und Softwarecodeabschnitte umfasst, mit denen die Schritte des hierin beschriebenen Verfahrens ausgeführt werden, wenn das Produkt auf einem Computer läuft. Das Computerprogrammprodukt kann in der Gestalt eines Datenträgers, wie z.B. einer DVD, einer CD-ROM oder eines USB-Speichersticks, verkörpert sein. Das Computerprogrammprodukt kann auch in der Form eines über ein drahtloses oder leitungsgebundenes Netzwerk ladbares Signal vorliegen.

Die Erfindung wird nachfolgend näher anhand von Ausführungsbeispielen in der Zeichnung beschrieben. Es zeigen:

Fig. 1 ein Diagramm, das Schaltzustände eines steuerbaren Schaltelements bei der Ansteuerung eines spannungsgesteuerten Verbrauchers illustriert;

Fig. 2 ein elektrisches Ersatzschaltbild einer Brückenschaltung mit einer Halbbrücke, die auf einer ZweiQuadranten-Buck-Boost-Wandler-Topologie basiert;

Fig. 3 die idealisierten zeitlichen Verläufe von Spannung, Strom und Schaltzustand an einem Knotenpunkt der Halbbrücke im diskontinuierlichen Betrieb der Brückenschaltung aus Fig. 2;

Fig. 4 die realen, zeitlichen Verläufe von Spannung, Strom und Schaltzustand beim diskontinuierlichen Betrieb der Brückenschaltung aus Fig. 2 bei einem nichtresonanten Einschaltvorgang;

Fig. 5 den realen, zeitlichen Verlauf von Spannung, Strom und Schaltzustand beim diskontinuierlichen Betrieb der Brückenschaltung aus Fig. 2 bei einem resonanten Einschaltvorgang;

Fig. 6 ein elektrisches Ersatzschaltbild einer Brückenschaltung in Vollbrückentopologie (Vier-Quadranten-Buck-Boost-Wandler-Topologie);

Fig. 7 ein elektrisches Ersatzschaltbild einer Resonanzschaltung der in Fig. 6 gezeigten Brückenschaltung;

Fig. 8 den idealisierten, zeitlichen Verlauf von Strom- und Spannung beim diskontinuierlichen Betrieb der Brückenschaltung aus Fig. 6;

Fig. 9 den idealisierten, zeitlichen Verlauf von Strom- und Spannung der Brückenschaltung aus Fig. 6 im diskontinuierlichen Betrieb bei einem im Vergleich zu Fig. 8 anderen Arbeitspunkt;

Fig. 10 den realen, zeitlichen Verlauf von Strom- und Spannung der Brückenschaltung aus Fig. 6 bei idealer resonanter Schaltcharakteristik;

Fig. 11 den realen, zeitlichen Verlauf von Strom- und Spannung der Brückenschaltung aus Fig. 6 bei quasiresonanter Schaltcharakteristik;

Fig. 12 den realen, zeitlichen Verlauf von Strom- und Spannung gemäß der Steuerung der vorliegenden Erfindung, durch die ein quasi-resonantes Schalten unterbunden wird; und

Fig. 13 ein elektrisches Ersatzschaltbild, das die Brückenschaltung gemäß Fig. 6 zeigt, in der ein sich ergebender Strompfad bei einem Ausgleichsvorgang illustriert ist.

Bevor die erfindungsgemäße Steuerung einer resonant schaltenden Brückenschaltung zum Bereitstellen einer variablen Ausgangsspannung an ihrem Ausgang beschrieben wird, erfolgt zunächst eine Beschreibung der dabei zu überwindenden Problematik.

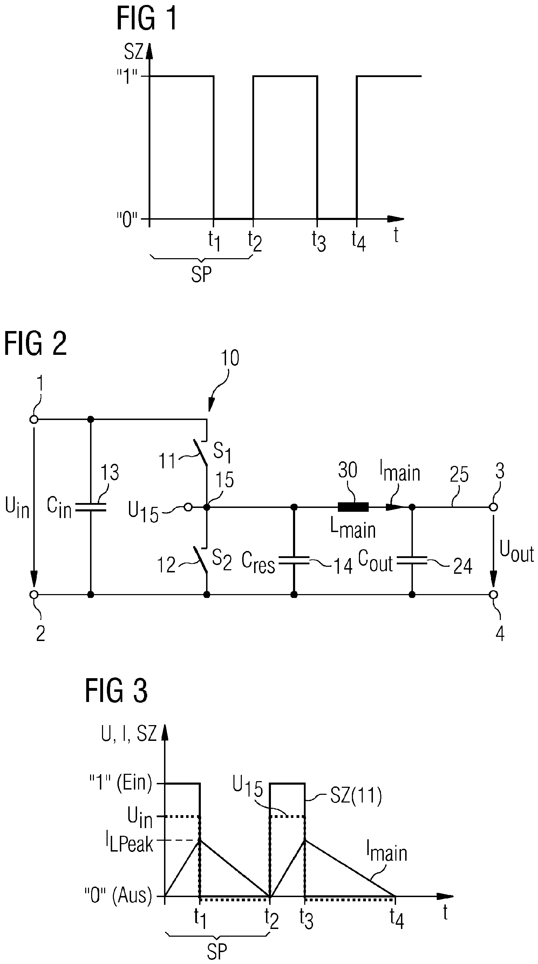

Fig. 2 zeigt eine Brückenschaltung, die auf der bekannten Zwei-Quadranten-Buck-Boost-Wandler-Topologie basiert. Die Brückenschaltung umfasst eine Halbbrücke 10, die zwei in Serie verschaltete steuerbare Schaltelemente 11, 12 umfasst. Die steuerbaren Schaltelemente 11, 12 sind in der Regel Halbleiterschaltelemente, wie z.B. MOSFETs, und werden auch als Leistungsschalter bezeichnet. Die Serienschaltung der Schaltelemente 11, 12 ist zwischen einem ersten Eingangsanschluss 1, an dem eine Versorgungspotentialspannung anliegt, und einem zweiten Eingangsanschluss 2, an dem eine Bezugspotentialspannung anliegt, verschaltet. Zwischen dem ersten und dem zweiten Eingangsanschluss 1, 2 liegt eine Eingangsspannung $U_{in}$. Parallel zu der Serienschaltung der zwei steuerbaren Schaltelemente 11, 12 ist ein Eingangskondensator 13 mit einer Kapazität $C_{in}$ verschaltet.

Ein zwischen den steuerbaren Schaltelementen 11, 12 liegender Knotenpunkt 15, an dem im Betrieb eine sich verändernde Spannung $U_{15}$ anliegt ist, ist über eine Induktivität 30, die einen Induktivitätswert $L_{main}$ aufweist, mit einem ersten Ausgangsanschluss 3 verbunden. Ein zweiter Ausgangsanschluss 4 liegt auf dem gleichen Potential, wie der zweite Eingangsanschluss 2. Der zweite Eingangsanschluss und der zweite Ausgangsanschluss 4 stellen Bezugspotentialanschlüsse dar. Zwischen dem ersten und dem zweiten Ausgangsanschluss 3, 4 ist eine Ausgangsspannung $U_{out}$ abgreifbar. Zwischen dem ersten Ausgangsanschluss 3 und dem zweiten Ausgangsanschluss 4 ist ein Ausgangskondensator 24 mit einer Kapazität $C_{out}$ verschaltet. Ferner ist ein Resonanzkondensator 14 mit einer Kapazität $C_{res}$ zwischen dem ersten Knotenpunkt 15 und dem Bezugspotentialanschluss 2, 4 verschaltet. Die Kapazität $C_{out}$ ist größer als die Kapazität $C_{res}$.

Anstelle des Resonanzkondensators 14 kann die Drain-Source-Kapazität des Schaltelements 12 als Resonanzkondensator genutzt werden. In dem in Fig. 2 gezeigten Beispiel ist eine Resonanzschaltung (auch als Resonanznetzwerk bezeichnet) aus der Induktivität 30 und dem Resonanzkondensator 14 gebildet. Ob die Resonanzschaltung mit mehreren verteilten Kapazitäten aufgebaut wird, ist technisch unerheblich.

Die zur Ansteuerung der steuerbaren Schaltelemente erforderliche Steuereinheit, welche auch das später beschriebene erfindungsgemäße Verfahren durchführt, ist nicht explizit dargestellt. Eine derartige Steuereinheit weist, wie dem Fachmann hinlänglich bekannt ist, entsprechende Ausgänge aus, mit denen die Steueranschlüsse der steuerbaren Schaltelemente sperrend oder leitend geschaltet wird. Ferner berechnet die Steuereinheit die Zeitpunkte, zu denen ein jeweiliges steuerbares Schaltelement sperrend oder leitend geschaltet werden muss.

Fig. 1 zeigt ein Diagramm, in der ein Schaltzustand SZ für eines der steuerbaren Schaltelemente, z.B. des Schaltelements 11 (wobei das Steuersignal dann als SZ(11) bezeichnet wird), über die Zeit dargestellt ist. Der Schaltzustand SZ nimmt entweder eine logische "1 an" (entsprechend einem leitend geschalteten Zustand oder "ein") oder eine logische "0" (entsprechend einem sperrend geschalteten Zustand oder "aus") an. Das Hin- und Herschalten erfolgt dabei alternierend. Zu den Zeitpunkten $t_1$ und $t_3$ wird das angesteuerte Schaltelement vom leitenden ("1") in den sperrenden Zustand ("0") geschaltet. Zu den Zeitpunkten 0, $t_2$ und $t_4$ wird das steuerbare Schaltelement vom sperrenden ("0") in den leitenden Zustand ("1") geschaltet. Eine Schaltperiode SP umfasst einen leitenden und einen sperrenden Zeitabschnitt und weist hier eine Zeitdauer zwischen 0 und $t_2$ bzw. $t_2$ und $t_4$ auf.

Die nachfolgenden zeitlichen Verläufe von Spannung, Strom und Schaltzustand in den Figuren 3 bis 5 beziehen sich beispielhaft auf das steuerbare Schaltelement 11 der in Fig. 2 gezeigten Brückenschaltung.

Fig. 3 zeigt die idealisierten Verläufe der an dem Knotenpunkt 15 anliegenden Spannung $U_{15}$ sowie den durch die Induktivität 30 fließenden Strom $I_{main}$. Ferner ist der zeitliche Verlauf des Steuersignals SZ(11) zur Ansteuerung des High-Side-Schaltelements 11 der Halbbrücke 10 aus Fig. 2 dargestellt. Gezeigt ist ein diskontinuierlicher Betrieb des Wandlers. Dies bedeutet, dass der Stromwert $I_{main}$ in der Induktivität 30 in jeder Schaltperiode SP auf 0 sinkt, bevor das über das Steuersignal SZ(11) steuerbare Steuerelement 11 wieder eingeschaltet wird. Wie unschwer zu erkennen ist, steigt der durch die Induktivität 30 fließende Strom $I_{main}$ mit dem Beginn des Einschaltens des Schaltelements 11 zum Zeitpunkt 0 bis zum Zeitpunkt $t_1$ an und sinkt hernach, da das Schaltelement 11 sperrend geschaltet ist, bis zum Zeitpunkt $t_2$ auf 0 ab. Anschließend wiederholt sich der beschriebene Schaltvorgang.

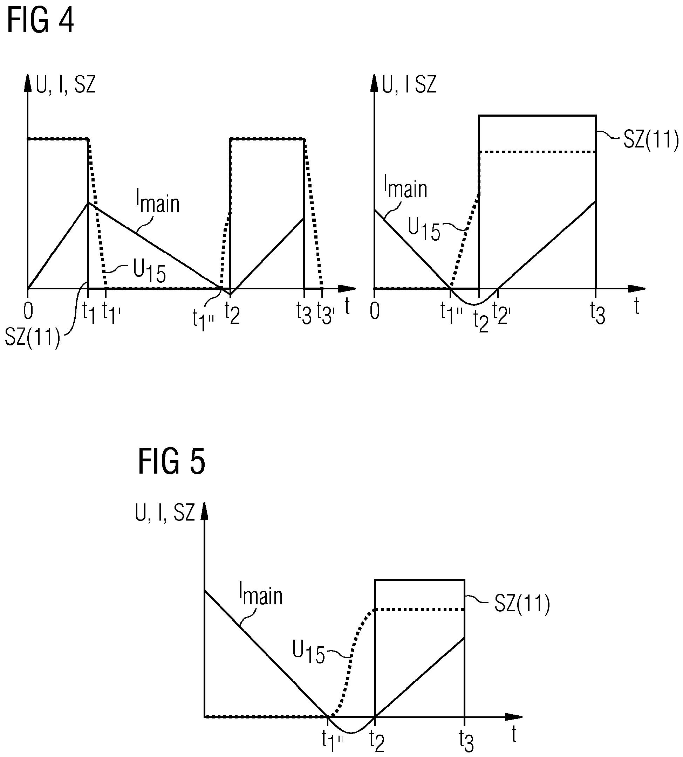

Ist, wie in Fig. 2 dargestellt, eine Resonanzkapazität 14 vorhanden, so verändert sich die Spannungsform an dem Knotenpunkt 15. Dies ist in Fig. 4 dargestellt. Sobald der Strom $I_{main}$ in der Induktivität 30 zum Zeitpunkt $t_1$" das Vorzeichen wechselt, beginnt das Resonanznetzwerk (umfassend die Induktivität 30 und die Resonanzkapazität 14) umzuschwingen. Wird das Schaltelement 11 zu einem beliebigen Zeitpunkt (hier: $t_2$) wieder eingeschaltet, bevor das Resonanznetzwerk vollständig umgeschwungen ist, so beginnt eine abrupte Aufladung des Resonanzkondensators 14 durch das Schaltelement 11. Der in der linken Hälfte von Fig. 4 dargestellte zeitliche Verlauf der Spannung $U_{15}$ verändert sich dadurch in der in der rechten Hälfte von Fig. 4 gezeigten Weise. Insbesondere ist hierbei zu erkennen, dass der Zeitpunkt $t_2$ des Einschaltens des Steuerelements 11 (d.h. der Veränderung des Schaltzustands SZ(11) von "0" auf "1"), zu dem die Spannung abrupt ansteigt, und der Nulldurchgang zum Zeitpunkt $t_2$' des durch die Induktivität 30 fließenden Stromes $I_{main}$ zeitlich auseinanderfallen.

Bei einem korrekten resonanten Einschaltvorgang ähnelt die Spannungsform $U_{15}$ am Knotenpunkt 15 der in Fig. 5 gezeigten Darstellung. Beim resonanten Einschaltvorgang wird das Schaltelement 11 genau im zweiten Strom-Nulldurchgang des Stroms $I_{main}$ zum Zeitpunkt $t_2$ wieder eingeschaltet.

Die Spannungsformen bei einem resonanten Einschaltvorgang sind allerdings nur dann so, wie in Fig. 5 dargestellt, wenn die Ausgangsspannung $U_{out}$ der Brückenschaltung genau halb so groß wie die Eingangsspannung $U_{in}$ ist, da die Amplitude der Schwingung im Resonanzkreis (d.h. der Resonanzschaltung bzw. dem Resonanznetzwerk) so groß ist wie die Ausgangsspannung $U_{out}$. Die Schwingung kann dann folgendermaßen beschrieben werden:

$$U(t) = U_{out} \sin(2\pi f_{res}) + U_{out} \qquad\qquad (1).$$

Muss eine resonant schaltende Brückenschaltung in der Lage sein, variable Ein- oder Ausgangsspannungsbereiche abzudecken, wie dies beispielsweise beim Laden einer großen kapazitiven Last der Fall ist, so wird die Brückenschaltung zwangsweise in Betriebspunkten betrieben, an denen nur eine quasi-resonante Schaltcharakteristik möglich ist. Ein idealer resonanter Schaltvorgang ist somit nur in einem Arbeitspunkt möglich.

Ein Beispiel für einen derartigen Verbraucher ist ein piezoelektrischer Aktuator. Dessen Eingangsspannung, die der Ausgangsspannung $U_{out}$ der Brückenschaltung entspricht, variiert je nach Ladezustand des piezoelektrischen Aktuators von 0 bis zur maximalen Piezospannung.

Steigt die Ausgangsspannung der Brückenschaltung auf mehr als die halbe Eingangsspannung, so ist in der Oszillation genug Energie, um den Resonanzkondensator 14 vollständig umzuladen. Da die erforderliche Energie zum vollständigen Umschwingen kleiner als die gespeicherte Energie im Schwingkreis ist, wird die überschüssige Energie der Oszillation über eine, in Fig. 2 nicht dargestellte, antiparallele Diode des steuerbaren Schaltelements 11 in den Eingangskondensator 13 geladen.

Ist hingegen die Ausgangsspannung $U_{out}$ der Brückenschaltung unterhalb der halben Eingangsspannung $U_{in}$, so ist in der Oszillation nicht genug Energie gespeichert, um den Resonanzkondensator 14 vollständig umzuladen. Der Nulldurchgang der Spannung $U_{15}$ am Schaltelement 11 kann somit nicht erreicht werden. Das Schaltelement 11 muss daher zwangsläufig unter sehr ungünstigen Verhältnissen einschalten, was der Quasi-Resonanz entspricht.

Wird die im Resonanzkreis befindliche Energie durch das Einschalten des Schaltelements 11 resistiv entladen, so führt dies zu sehr hohen Strömen und Verlusten. Zusätzlich entsteht ein EMV-Problem durch hohe Stromgradienten. Durch die Verwendung einer resonant schaltenden Ansteuerung der Brückenschaltung können die EMV-Emissionen reduziert und ein geringfügig besserer Wirkungsgrad erzielt werden.

Bei dem oben genannten Beispiel der Ansteuerung eines piezoelektrischen Aktuators durch eine resonant schaltende Brückenschaltung gibt es somit zwangsläufig Arbeitspunkte, in denen nur quasi-resonant geschaltet werden kann. Somit wird das Gegenteil der erhofften Wirkung einer resonant schaltenden Topologie erreicht, da das schnelle Entladen des Resonanzkondensators erhöhte EMV-Emissionen mit sich bringt.

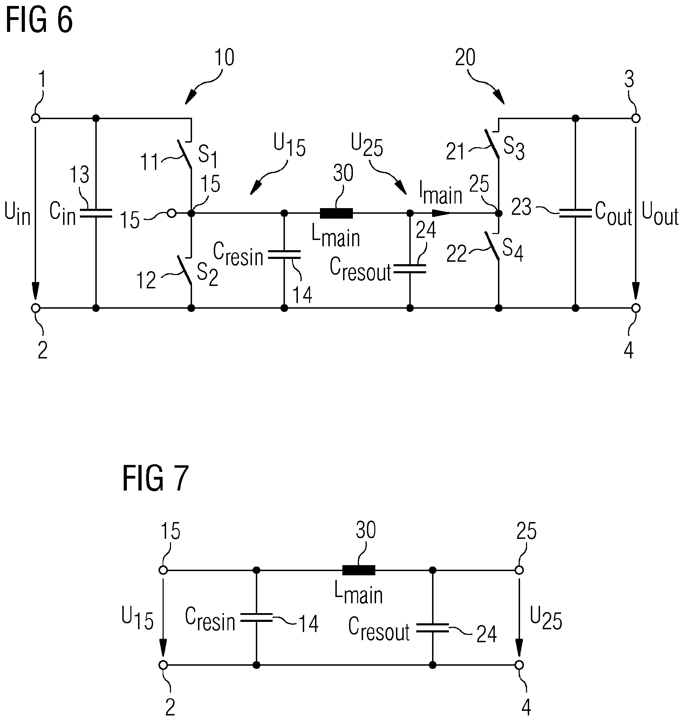

Abhilfe kann hier durch eine Brückenschaltung in Vollbrückentopologie geschaffen werden, die nach dem Prinzip des Vier-Quadranten-Buck-Boost-Wandlers arbeitet und parallel zu den Schaltelementen weitere Resonanzkondensatoren umfasst. Das elektrische Ersatzschaltbild einer derartigen Brückenschaltung ist in Fig. 6 dargestellt, wobei Fig. 7 das dadurch entstehende Resonanznetzwerk bzw. die darin verwendete Resonanzschaltung in einem äquivalenten Ersatzschaltbild zusammenfasst. Es wird hierbei angemerkt, dass es für das nachfolgend beschriebene Prinzip der Erfindung unerheblich ist, ob die Resonanzkondensatoren durch mehrere verteilte Resonanzkondensatoren gebildet sind oder nicht.

Die in Fig. 6 gezeigte Vollbrückenschaltung ist gegenüber der in Fig. 2 dargestellten und bereits beschriebenen Brückenschaltung um eine zweite Halbbrücke 20 erweitert. Die zweite Halbbrücke 20 umfasst eine Serienschaltung aus einem dritten steuerbaren Schaltelement 21 und einem vierten steuerbaren Schaltelement 22. Die Serienschaltung der beiden steuerbaren Schaltelemente 21, 22 ist zwischen dem ersten und dem zweiten Ausgangsanschluss 3, 4 verschaltet. Parallel zu der Serienschaltung aus dem dritten und dem vierten steuerbaren Schaltelement 21, 22 ist ein Ausgangskondensator 23 angeordnet. Ein zweiter Knotenpunkt 25 zwischen dem dritten und dem vierten steuerbaren Schaltelement 21, 22 ist mit der bereits erwähnten Induktivität 30 verbunden. Zwischen dem zweiten Knotenpunkt 25 und dem Bezugspotentialanschluss (d.h. dem zweiten Ausgangsanschluss 4 oder dem zweiten Eingangsanschluss 2) ist ein zweiter Kondensator 24 verschaltet.

Die in Fig. 7 gezeigte Resonanzschaltung (Resonanznetzwerk) umfasst die Induktivität 30 sowie den ersten und den zweiten Kondensator 14, 24, wobei der erste Kondensator 14 eine eingangsseitige Resonanzkapazität und der zweite Kondensator 24 eine ausgangsseitige Resonanzkapazität bildet. Zwischen dem ersten Knotenpunkt 15 und dem Bezugspotentialanschluss (d.h. dem zweiten Eingangsanschluss 2) fällt die Spannung $U_{15}$ ab, auf die in den nachfolgenden Figuren näher Bezug genommen wird. Eine Ausgangsspannung der Resonanzschaltung $U_{25}$ liegt zwischen dem zweiten Knotenpunkt und dem Bezugspotentialanschluss (d.h. dem zweiten Ausgangsanschluss 4) an.

Beim Einsatz einer Brückenschaltung in Vollbrückentopologie, wie in Fig. 6 gezeigt, muss das Verhältnis von

Eingangsspannung $U_{in}$ zu Ausgangsspannung $U_{out}$ konstant bleiben, um einen vollresonant schaltenden Betriebsmodus zu erreichen. Da die Kapazitätswerte $C_{res\_in}$ des ersten Kondensators 14 und $C_{res\_out}$ des zweiten Kondensators 24 fest sind und ein vollresonantes Schalten nur möglich ist, wenn im Umschwingvorgang eine genau definierte Energiemenge vorhanden ist, ist bei einer Abweichung des Spannungsverhältnisses von Eingangsspannung $U_{in}$ zu Ausgangsspannung $U_{out}$ nur mehr ein teilresonanter Betrieb möglich. Die Energiemenge im Umschwingkreis definiert sich anschaulich darüber, dass die Spannung am ersten Knotenpunkt 15 von $U_{in}$ bis nach 0 V und die Spannung $U_{25}$ am zweiten Knotenpunkt 25 von 0 V bis nach $U_{out}$ geladen werden muss.

Muss eine derartige Brückenschaltung in der Lage sein, variable Ein- und Ausgangsspannungsbereiche abzudecken, so kommt es beim Umschwingvorgang des wie in Fig. 7 gezeigten Resonanznetzwerks bei einem abweichenden Spannungsverhältnis $U_{in}/U_{out}$ zu unerwünschten Spannungsüberhöhungen oder zu quasi-resonanten Schaltvorgängen. Bei Spannungsüberhöhungen kommt es zu Ausgleichsvorgängen über die notwendigen antiparallelen Dioden der Schaltelemente, was Verluste mit sich bringt. Bei quasi-resonanten Schaltvorgängen treten unerwünscht hohe Stromgradienten in den Schaltelementen auf, die Verluste und EMV-Probleme mit sich bringen.

Bei gegebenem Verhältnis zwischen Eingangsspannung $U_{in}$ und Ausgangsspannung $U_{out}$ ergibt sich das Verhältnis der beiden Resonanzkapazitäten 14, 24 zueinander wie folgt:

$$E_{System_{min}} = \frac{1}{2} C_{res\_in} U_{in}^2 , \qquad (2)$$

$$\frac{1}{2} C_{res\_in} U_{in}^2 = \frac{1}{2} C_{res\_out} U_{out}^2 , \qquad (3)$$

und

$$\sqrt{\frac{C\_res\_in}{C\_res\_out}} = \frac{U_{out}}{U_{in}} \qquad (4) .$$

Am Beispiel einer Brückenschaltung für das Ansteuern eines spannungsgesteuerten Verbrauchers, wie z.B. einem piezoelektrischen Aktuator, gibt es keinen stationären Arbeitspunkt der eingesetzten Brückenschaltung. Die Ausgangsspannung variiert von 0 V bis zur maximalen Eingangsspannung des Verbrauchers. Folglich gibt es für resonant schaltende Vier-Quadranten-Buck-Boost-Wandler, wie dieser in Fig. 6 dargestellt ist, Arbeitspunkte, in denen nur eine teilresonante Schaltcharakteristik möglich ist. Dies bedeutet, dass je nach Arbeitspunkt und Dimensionierung der Resonanzkondensatoren 14, 24 die erste Halbbrücke am Eingang oder die zweite Halbbrücke am Ausgang nur quasi-resonant schalten kann. Dies wiederum bringt aufgrund der hohen Stromgradienten erhebliche Verschlechterungen in der EMV-Emission mit sich.

Der Einsatz einer Brückenschaltung in Vier-Quadranten-Buck-Boost-Topologie hat im Gegensatz zur Zwei-Quadranten-Buck-Boost-Topologie den Vorteil einer möglichen niedrigeren Eingangsspannung, wodurch das Versorgungsnetz weniger aufwändig ist. Ferner kann der Eingangskondensator 13 durch Keramikkondensatoren realisiert werden, im Gegensatz zu Elektrolytkondensatoren bei Zwei-Quadranten-Buck-Boost-Wandlern aufgrund der hohen Eingangsspannung.

Das nachfolgend beschriebene Verfahren ermöglicht die Verwendung einer Brückenschaltung in Vollbrückentopologie und die oben erwähnten Nachteile bei der Ansteuerung eines spannungsgesteuerten Verbrauchers, wie z.B. den piezoelektrischen Aktuator. Dies wird durch die Einrichtung der bereits erwähnten, aber in den Figuren nicht dargestellten Steuereinheit ermöglicht, welche die Ansteuerung der steuerbaren Schaltelemente übernimmt.

Ein resonanten Schalten der in Fig. 6 gezeigten Brückenschaltung wird dadurch ermöglicht, dass bei einem Schaltvorgang, bei dem ein Paar an Schaltelementen, das ein High-Side-Schaltelement der ersten Halbbrücke 10 (d. h. des Schaltelements 11 oder 21) und ein Low-Side-Schaltelement der jeweils anderen Halbbrücke 20, 10 (d.h. des Schaltelements 22 der zweiten Halbbrücke oder des Schaltelements 12 der ersten Halbbrücke) umfasst, ein- oder ausgeschaltet wird durch Erzeugung entsprechender Steuersignale. Dabei wird ein zeitlicher Versatz der Schaltzeitpunkte des Schaltvorgangs für die Schaltelemente des Paars an Schaltelementen ermittelt, welche bei der Erzeugung Steuersignale berücksichtigt werden. Der zeitliche Versatz wird so bestimmt, dass die Energie in der Resonanzschaltung genau so groß ist, dass bei einem Umschwingvorgang der erste und der zweite Resonanzkondensator 14, 24 vollständig umgeladen werden.

Durch das zeitlich versetzte Ansteuern der jeweiligen High-Side- und Low-Side-Schaltelemente zwischen der ersten und der zweiten Halbbrücke ist es möglich, einen vollresonanten Betrieb der Leistungselektronik unter beliebigen Ein- und Ausgangsspannungsverhältnissen zu erreichen. Der zeitliche Versatz der beiden Leistungsstufen, d.h. der ersten und der zweiten Halbbrücke, der es ermöglicht, die Energie im Resonanzkreis genau so groß werden zu lassen, dass beim Umschwingvorgang beide Seiten des Resonanzkreises vollständig umgeladen werden, kann gemäß den Gleichungen (5) bis (7) ermittelt werden, wobei Gleichung (7) der Gleichung (4) entspricht:

$$E_{System_{min}} = \frac{1}{2} C_{res\_in} U_{in}^2 \qquad (5),$$

$$\frac{1}{2} C_{res\_in} U_{in}^2 = \frac{1}{2} C_{res\_out} U_{out}^2 \qquad (6)$$

und

$$\sqrt{\frac{C\_res\_in}{C\_res\_out}} = \frac{U_{out}}{U_{in}} \qquad (7).$$

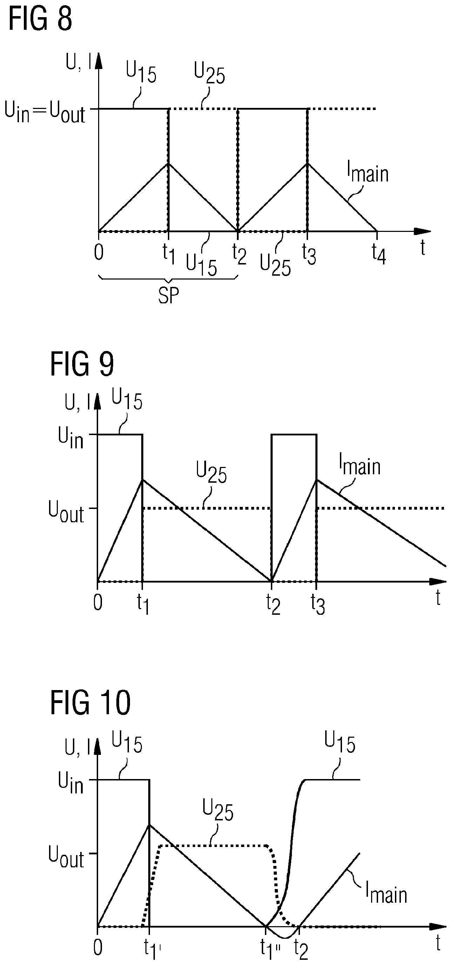

Der sich hieraus ergebende Effekt wird anhand der Figuren 8 bis 12 näher erläutert.

Fig. 8 zeigt die idealisierten zeitlichen Strom- und Spannungsverläufe des durch die Induktivität 30 fließenden Stroms $I_{main}$ sowie der Spannungen $U_{15}$, $U_{25}$ an den Knotenpunkten 15, 25 der als Vier-Quadranten-Buck-Boost-Topologie ausgebildeten

Brückenschaltung im diskontinuierlichen Betrieb. Der Strom $I_{main}$ geht in jeder Schaltperiode SP auf 0 zurück. Dies ist zu den Zeitpunkten $t_2$ und $t_4$ der Fall. Die Besonderheit in diesem Verlauf ist, dass die Eingangs- und Ausgangsspannung gleich groß sind, d.h. $U_{in} = U_{out}$. Daher ist auch der Stromgradient in der Induktivität 30 in der Ein-Phase des Schaltelements 11 (zwischen 0 und $t_1$ sowie zwischen $t_2$ und $t_3$) und in der Aus-Phase (zwischen $t_1$ und $t_2$ sowie zwischen $t_3$ und $t_4$) betragsmäßig gleich groß. Hierdurch sind die Amplituden der Spannungen $U_{15}$ und $U_{25}$ an dem ersten und dem zweiten Knotenpunkt 15, 25 ebenfalls gleich groß.

Fig. 9 zeigt die idealisierten zeitlichen Spannungs- und Stromverläufe des durch die Induktivität 30 fließenden Stroms $I_{main}$ sowie der Spannungen $U_{15}$, $U_{25}$ an den Knotenpunkten 15, 25 der Brückenschaltung aus Fig. 6 im diskontinuierlichen Betrieb in einem anderen Arbeitspunkt. Es ist zu erkennen, dass die Ausgangsspannung $U_{out}$ kleiner als die Eingangsspannung $U_{in}$ ist. Hieraus ergibt sich, dass sich die Stromgradienten während der leitenden Phase des High-Side-Schaltelements 11 (zwischen 0 und $t_1$ sowie zwischen $t_2$ und $t_3$) unterscheiden, ebenso während der Phase, während das High-Side-Schaltelement 11 sperrend geschaltet ist (also zwischen $t_1$ und $t_2$ sowie ab $t_3$). In der leitenden Phase des High-Side-Schaltelements 11 sind die Schaltelemente 12 und 21 gesperrt, während das Schaltelement 22 ebenfalls leitend geschaltet ist. In der sperrenden Phase des High-Side-Schaltelements 11 sind die Schaltelemente 12 und 21 leitend, während das Schaltelement 22 ebenfalls sperrend geschaltet ist.

Fig. 10 zeigt die ideale resonante Schaltcharakteristik der Brückenschaltung gemäß Fig. 6. Im dargestellten Fall ist die Dimensionierung der Resonanzkondensatoren 14, 24 genau auf das dargestellte Verhältnis der Ausgangsspannung $U_{out}$ zur Eingangsspannung $U_{in}$ ausgelegt, wodurch der erste und der zweite Nulldurchgang des Stroms Imain zu den Zeitpunkt $t_1$" und $t_2$ mit dem Spannungsnulldurchgang der Spannungen $U_{25}$ und $U_{15}$ zusammenfallen.

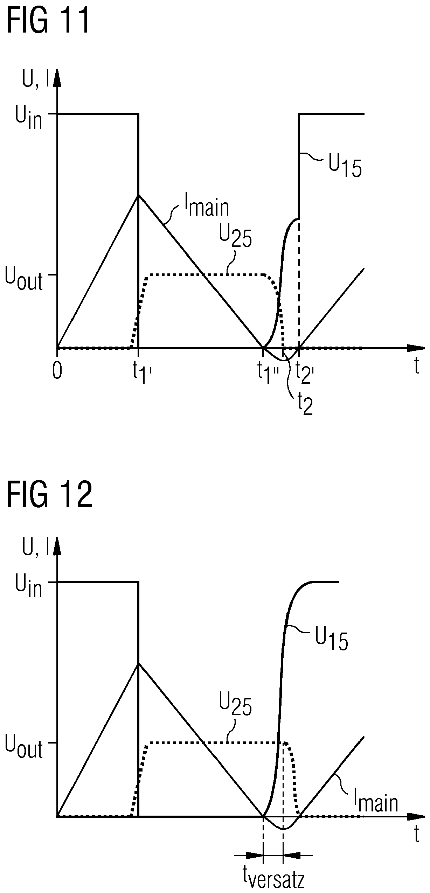

Demgegenüber zeigt Fig. 11 die Situation, in der das Spannungsverhältnis $U_{in}$ zu $U_{out}$ (d.h. Uout $\neq$ ½ Uin) voneinander abweicht, so dass nur mehr eine quasi-resonante Schaltcharakteristik möglich ist, was sich durch den verzögerten Nulldurchgang zum Zeitpunkt $t_2$' des durch die Induktivität 30 fließenden Stromes $I_{main}$ gegenüber dem Nulldurchgang der Spannung $U_{25}$ bemerkbar macht. Zum Zeitpunkt $t_2$' des zweiten Nulldurchganges des Stromes $I_{main}$ steigt die Spannung $U_{15}$ am ersten Knotenpunkt 15 schlagartig auf die Höhe der Eingangsspannung $U_{in}$ an, da das High-Side-Schaltelement 11 der ersten Halbbrücke 10 zu diesem Zeitpunkt leitend geschaltet wird. Durch den schlagartigen Stromanstieg ergibt sich eine EMV-Abstrahlung. Ursache ist die an dem ersten Knotenpunkt 15 zu kleine Spannung $U_{15}$, was aus der zu kleinen Ausgangsspannung $U_{out}$ resultiert.

Fig. 12 zeigt die durch die erfindungsgemäße Steuereinheit erzeugte Modulationsart, mit der das Problem des quasi-resonanten Schaltens unterbunden wird. Es wird ein zeitlicher Versatz $t_{Versatz}$ der Ansteuersignale der Steuerelemente der ersten und zweiten Halbbrücke 10, 20 so hinzugefügt, dass in der Zeit $t_{Versatz}$ das Resonanznetzwerk, umfassend die Induktivität 30 sowie die Resonanzkondensatoren 14, 24, soweit umschwingen kann, dass exakt die notwendige Energie für das Umladen der zeitlich versetzt angesteuerten Seite, hier der zweiten Halbbrücke 20, bereitgestellt werden kann.

Der zeitliche Versatz wird so berechnet, dass Gleichung (8) erfüllt werden kann. Gleichung (8) resultiert aus dem Energieerhaltungssatz. Ist die Energie im Schwingkreis (linke Seite der Gleichung) gleich groß wie die notwendige Energie zum Umladen der gegenüberliegenden Resonanzkapazität 24, dann wird das Schaltelement der ausgangsseitigen Halbbrücke geöffnet und ein Umladen zugelassen:

$$C_{res\_in}U_{15}^2 - L_{Main}I_{Main}^2 = C_{res\_out}U_{out}^2 \qquad (8).$$

Sollte die Ausgangsspannung $U_{out}$ die benötigte Mindestausgangsspannung für das Überwinden des quasi-resonanten Bereichs überwinden, so bringt dieses Modulationsverfahren Vorteile dahingehend, da die überschüssige Energie des Ausgangsresonanzkondensators 24 beim Umladen nicht durch die antiparallelen Dioden an dem eingangsseitigen Schaltelement der ersten Halbbrücke 10 in den Eingangskondensator 13 zurückgeladen werden muss. In diesen Arbeitspunkten kann das Modulationsverfahren den Effektivstrom durch die in den Schaltelementen vorhandenen Dioden reduzieren.

Zur Realisierung der Berechnung des zeitlichen Versatzes $t_{Versatz}$ wird eine hohe zeitliche Auflösung der Strommessung in der Induktivität 30 benötigt, da dieser Wert entscheidend für die Berechnung von $t_{Versatz}$ ist. Ebenso ist ein rechnerischer Weg möglich. Hierdurch wird der Nulldurchgang des Stromes in der Induktivität erkannt und die Differentialgleichung des Schwingkreises gelöst, um den zeitlichen Versatz $t_{Versatz}$ zu berechnen.

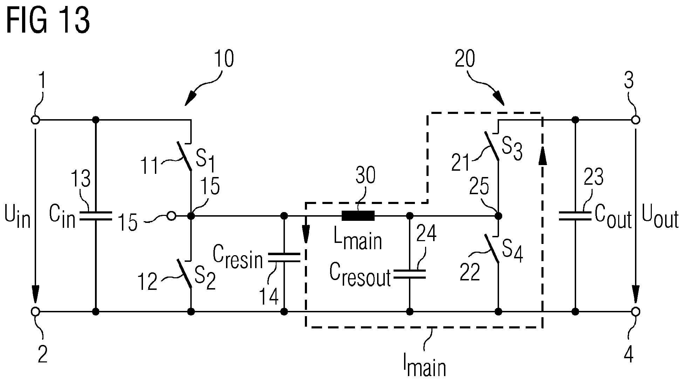

Bei sehr niedrigen Ausgangsspannungen $U_{out}$ ist sicherzustellen, dass in dem Ausgangskondensator 23 genug Energie gespeichert ist, um den eingangsseitigen Resonanzkondensator 14 auf das Spannungsniveau der Eingangsspannung $U_{in}$ aufzuladen. Die Energie für das Umladen des eingangsseitigen Resonanzkondensators 14 wird dabei nur zu einem kleinen Teil aus der ausgangsseitigen Resonanzkapazität 24 genommen. Der größte Teil wird im Fall einer kleinen Ausgangsspannung $U_{out}$ in der Zeit $t_{Versatz}$ über das High-Side-Schaltelement 21 aus dem Ausgangskondensator 23 zurückgeladen, wie dies der Fig. 13 entnehmbar ist.

Wird eine noch niedrigere Mindestausgangsspannung in Abhängigkeit der Dimensionierung gefordert, so wird das Modulationsverfahren ebenfalls auf die gegenüberliegende Halbbrücke, d.h. die erste Halbbrücke 10, angewandt.

In der, wie in Fig. 13 dargestellten Konstellation, kann die Ausgangsspannung nicht niedriger als in Gleichung (9) beschrieben sein:

$$U_{out\_min} = \frac{U_{in}}{2} - \sqrt{\frac{C\_res\_in}{C\_res\_out}}U_{out} \qquad (9).$$

Gleichung (9) wird aus Gleichung (7) abgeleitet. Dies bedeutet, die Energie für die Umschwingung des eingangsseitigen Resonanzkondensators 14 kann aus der Umschwingung der Induktivität 30 und des Ausgangskondensators 23 sowie der zusätzlichen Energie aus der ausgangsseitigen Resonanzkapazität 23 kommen.

Wird in diesem Beispiel eine Modulation mittels der ersten Halbbrücke 10 durchgeführt, z.B. dem Low-Side-Schaltelement 12, so wird ein zusätzlicher zeitlicher Versatz eingeführt. Enthält die Ausgangskapazität 23 auch bei der niedrigsten geforderten Ausgangsspannung die notwendige Energiemenge, um den Resonanzkondensator 13 von 0 V bis zur Eingangsspannung $U_{in}$ umzuladen, so wird das Low-Side-Schaltelement 12 solange geschlossen gehalten, bis Gleichung (10) erfüllt ist.

$$\frac{1}{2}L_{Main}I_{Main\_Init}^2 = \frac{1}{2}C_{res\_in}U_{in}^2 \qquad (10).$$

Darin ist $I_{Main\_Init}$ der Stromwert zum Zeitpunkt des zusätzlichen Versatzes der Eingangsseite. Folglich ist für ein vollresonantes Schalten unter der Annahme, dass die Ausgangskapazität ausreichend groß für die Mindestausgangsspannung ist, in jedem Arbeitspunkt ab dem Erreichen einer frei wählbaren Mindestausgangsspannung möglich.

Bezugszeichenliste

1      erster Eingangsanschluss
2      zweiter Eingangsanschluss (Bezugspotentialanschluss)
3      erster Ausgangsanschluss
4      zweiter Ausgangsanschluss (Bezugspotentialanschluss)
10    erste Halbbrücke

| | |
|---|---|
| 11 | erstes steuerbares (oder High-Side-) Schaltelement |
| 12 | zweites steuerbares (oder Low-Side-) Schaltelement |
| 13 | Eingangskondensator |
| 14 | erster Kondensator |
| 15 | erster Knotenpunkt |
| 20 | zweite Halbbrücke |
| 21 | erstes steuerbares (oder High-Side-) Schaltelement |
| 22 | zweites steuerbares (oder Low-Side-) Schaltelement |
| 23 | Ausgangskondensator |
| 24 | zweiter Kondensator |
| 25 | zweiter Knotenpunkt |
| 30 | Induktivität |

| | |
|---|---|
| SZ | Schaltzustand |
| SP | Schaltperiode |
| $I_{main}$ | Strom durch die Induktivität 30 |
| $U_{15}$ | Spannung am ersten Knotenpunkt 15 |
| $U_{25}$ | Spannung am zweiten Knotenpunkt 25 |
| $U_{in}$ | Eingangsspannung |
| $U_{out}$ | Ausgangsspannung |

**Patentansprüche**

1. Steuereinheit zum Bereitstellen einer variablen Ausgangsspannung ($U_{out}$) am Ausgang einer resonant schaltenden Brückenschaltung, wobei die Brückenschaltung umfasst:

   - eine erste Halbbrücke (10) mit einem ersten und einem zweiten steuerbaren Schaltelement (11, 12), die in Serienschaltung zwischen einem ersten und einem zweiten Eingangsanschluss (1, 2) verschaltet sind, zwischen denen eine Eingangsspannung ($U_{in}$) anliegt;
   - eine zweite Halbbrücke (20) mit einem dritten und einem vierten steuerbaren Schaltelement (21, 22), die in Serienschaltung zwischen einem ersten und einem zweiten Ausgangsanschluss (3, 4) verschaltet sind, zwischen denen die Ausgangsspannung ($U_{out}$) zur Ansteuerung eines spannungsgesteuerten Verbrauchers anliegt;
   - einer Resonanzschaltung mit einer Induktivität (30), die zwischen einem ersten Knotenpunkt (15), der das erste und das zweite steuerbare Schaltelement (11, 12) miteinander verbindet, und einem zweiten Knotenpunkt (25), der das dritte und das vierte steuerbare Schaltelement (21, 22) miteinander verbindet, verschaltet ist, mit einem ersten Kondensator (14), der zwischen dem ersten Knotenpunkt (15) und dem zweiten Eingangsanschluss (2) verschaltet ist, und mit einem zweiten Kondensator (24), der zwischen dem zweiten Knotenpunkt (25) und dem zweiten Ausgangsanschluss (4) verschaltet ist;

   wobei die Steuereinheit dazu ausgebildet ist,

   - einen Schaltvorgang, bei dem ein Paar an Schaltelementen (11, 22 oder 12, 21), das ein High-Side-Schaltelement der ersten oder zweiten Halbbrücke (10, 20) und ein Low-Side-Schaltelement der jeweils anderen Halbbrücke (20, 10) umfasst, ein- oder ausgeschaltet wird, durch Erzeugung entsprechender Steuersignale durchzuführen,
   - einen zeitlichen Versatz der Schaltzeitpunkte des Schaltvorgangs für die Schaltelemente des Paars an Schaltelementen (11, 22 oder 12, 21) zu ermitteln und zur Erzeugung der Steuersignale zu verarbeiten, wobei der zeitliche Versatz so bestimmt wird, dass die Energie in der Resonanzschaltung genau so groß ist, dass bei einem Umschwingvorgang der erste und der zweite Kondensator (14, 24) vollständig umgeladen werden.

2. Steuereinheit nach Anspruch 1, **dadurch gekennzeichnet, dass** die Steuereinheit dazu ausgebildet ist, die Größe des zeitlichen Versatzes in Abhängigkeit der zu erzielenden Ausgangsspannung zu bestimmen.

3. Steuereinheit nach Anspruch 1 oder 2, **dadurch gekennzeichnet, dass** die folgende Gleichung erfüllt ist:

$$C_{res\_in}U_{node_{in}}^2 - L_{Main}I_{Main}^2 = C_{res_{out}}U_{out}^2$$

wobei in dieser Gleichung

$C_{res\_in}$ die Kapazität des ersten Kondensators (14),
$C_{res\_out}$ die Kapazität des zweiten Kondensators (24),
$U_{15}$ die am ersten Knotenpunkt (15) anliegende Spannung,
$U_{out}$ die Ausgangsspannung,
$L_{main}$ die Induktivität der Induktivität (30), und
$I_{main}$ der durch die Induktivität (30) fließende Strom sind.

**4.** Steuereinheit nach einem der vorhergehenden Ansprüche, **dadurch gekennzeichnet, dass** die Steuereinheit dazu ausgebildet ist, einen Strommesswert zu empfangen, der dem durch die Induktivität (30) fließenden Strom ($I_{main}$) entspricht.

**5.** Steuereinheit nach Anspruch 3, **dadurch gekennzeichnet, dass** diese dazu ausgebildet ist, einen Nulldurchgang des durch die Induktivität (30) fließenden Stroms ($I_{main}$) zu ermitteln und die Gleichung des in der Brückenschaltung vorliegenden Schwingkreises unter Berücksichtigung des ermittelten zeitlichen Versatzes (t_Versatz) zu lösen.

**6.** Steuereinheit nach einem der vorhergehenden Ansprüche, **dadurch gekennzeichnet, dass** die Kapazität ($C_{res\_out}$) des zweiten Kondensators (24) größer als die Kapazität ($C_{res\_in}$) des ersten Kondensators (14) ist.

**7.** Steuereinheit nach einem der vorhergehenden Ansprüche, **dadurch gekennzeichnet, dass** die Steuereinheit dazu ausgebildet ist, das High-Side-Schaltelement der zweiten Halbbrücke (20) zeitlich nach dem Low-Side-Schaltelement der ersten Halbbrücke (10) sperrend zu schalten, unter der Bedingung, dass die Ausgangsspannung ($U_{out}$) kleiner als eine vorgegebene Mindestspannung ist.

**8.** Steuereinheit nach einem der vorhergehenden Ansprüche, **dadurch gekennzeichnet, dass** die Steuereinheit dazu ausgebildet ist, das High-Side-Schaltelement der ersten Halbbrücke (10) und das Low-Side-Schaltelement der zweiten Halbbrücke (20) etwa zeitgleich leitend zu schalten, unter der Bedingung, dass die Ausgangsspannung ($U_{out}$) kleiner als eine vorgegebene Mindestspannung ist.

**9.** Steuereinheit nach Anspruch 7 oder 8, **dadurch gekennzeichnet, dass** die vorgegebene Mindestspannung gegeben ist durch:

$$U_{out\_min} = \frac{U_{In}}{2} - \sqrt{\frac{C\_res\_in}{C\_res\_out}}U_{Out}.$$

**10.** Verfahren zum Bereitstellen einer variablen Ausgangsspannung ($U_{out}$) am Ausgang einer resonant schaltenden Brückenschaltung, wobei die Brückenschaltung umfasst:

- eine erste Halbbrücke (10) mit einem ersten und einem zweiten steuerbaren Schaltelement (11, 12), die in Serienschaltung zwischen einem ersten und einem zweiten Eingangsanschluss (1, 2) verschaltet sind, zwischen denen eine Eingangsspannung ($U_{in}$) anliegt;
- eine zweite Halbbrücke (20) mit einem dritten und einem vierten steuerbaren Schaltelement (21, 22), die in Serienschaltung zwischen einem ersten und einem zweiten Ausgangsanschluss (3, 4) verschaltet sind, zwischen denen die Ausgangsspannung ($U_{out}$) zur Ansteuerung eines spannungsgesteuerten Verbrauchers anliegt;
- einer Resonanzschaltung mit einer Induktivität (30), die zwischen einem ersten Knotenpunkt (15), der das erste und das zweite steuerbare Schaltelement (11, 12) miteinander verbindet, und einem zweiten Knotenpunkt (25), der das dritte und das vierte steuerbare Schaltelement (21, 22) miteinander verbindet, verschaltet ist, mit einem ersten Kondensator (14), der zwischen dem ersten Knotenpunkt (15) und dem zweiten Eingangsanschluss (2) verschaltet ist, und mit einem zweiten Kondensator (24), der zwischen dem zweiten Knotenpunkt (25) und dem zweiten Ausgangsanschluss (4) verschaltet ist;

wobei:

- durch Erzeugung entsprechender Steuersignale ein Schaltvorgang, bei dem ein Paar an Schaltelementen (11, 22 oder 12, 21), das ein High-Side-Schaltelement der ersten oder zweiten Halbbrücke (10, 20) und ein Low-Side-Schaltelement der jeweils anderen Halbbrücke (20, 10) umfasst, ein- oder ausgeschaltet wird,
- ein zeitlicher Versatz der Schaltzeitpunkte des Schaltvorgangs für die Schaltelemente des Paars an Schaltelementen (11, 22 oder 12, 21) ermittelt wird und zur Erzeugung der Steuersignale verarbeitet wird, wobei der zeitliche Versatz so bestimmt wird, dass die Energie in der Resonanzschaltung genau so groß ist, dass bei einem Umschwingvorgang der erste und der zweite Kondensator (14, 24) vollständig umgeladen werden.

11. Verfahren nach Anspruch 10, **dadurch gekennzeichnet, dass** die Größe des zeitlichen Versatzes in Abhängigkeit der zu erzielenden Ausgangsspannung bestimmt wird.

12. Verfahren nach Anspruch 10 oder 11, **dadurch gekennzeichnet, dass** die folgende Gleichung erfüllt ist:

$$C_{res\_in}U_{node_{in}}^2 - L_{Main}I_{Main}^2 = C_{res_{out}}U_{out}^2$$

wobei in dieser Gleichung

$C_{res\_in}$ die Kapazität des ersten Kondensators (14),
$C_{res\_out}$ die Kapazität des zweiten Kondensators (24),
$U_{node in}$ die am ersten Knotenpunkt (15) anliegende Spannung,
$U_{out}$ die Ausgangsspannung,
$L_{main}$ die Induktivität der Induktivität (30), und
$I_{main}$ der durch die Induktivität (30) fließende Strom sind.

13. Verfahren nach einem der Ansprüche 10 bis 12, **dadurch gekennzeichnet, dass** ein Strommesswert empfangen wird, der dem durch die Induktivität (30) fließenden Strom ($I_{main}$) entspricht.

14. Verfahren nach Anspruch 12, **dadurch gekennzeichnet, dass** ein Nulldurchgang des durch die Induktivität (30) fließenden Stroms ($I_{main}$) ermittelt wird und die Gleichung des in der Brückenschaltung vorliegenden Schwingkreises unter Berücksichtigung des ermittelten zeitlichen Versatzes (t_Versatz) gelöst wird.

15. Verfahren nach einem der Ansprüche 10 bis 14, **dadurch gekennzeichnet, dass** das High-Side-Schaltelement der zweiten Halbbrücke (20) zeitlich nach dem Low-Side-Schaltelement der ersten Halbbrücke (10) sperrend geschaltet wird, unter der Bedingung, dass die Ausgangsspannung ($U_{out}$) kleiner als eine vorgegebene Mindestspannung ist.

16. Verfahren nach einem der Ansprüche 10 bis 15, **dadurch gekennzeichnet, dass** das High-Side-Schaltelement der ersten Halbbrücke (10) und das Low-Side-Schaltelement der zweiten Halbbrücke (20) etwa zeitgleich leitend geschaltet werden, unter der Bedingung, dass die Ausgangsspannung ($U_{out}$) kleiner als eine vorgegebene Mindestspannung ist.

17. Verfahren nach einem der Ansprüche 10 bis 16, **dadurch gekennzeichnet, dass** die vorgegebene Mindestspannung gegeben ist durch:

$$U_{out\_min} = \frac{U_{in}}{2} - \sqrt{\frac{C\_res\_in}{C\_res\_out}}\, U_{Out}\,.$$

18. Computerprogrammprodukt, das direkt in den internen Speicher eines digitalen Computers geladen werden kann und Softwarecodeabschnitte umfasst, mit denen die Schritte gemäß einem der Ansprüche 10 bis 17 ausgeführt werden, wenn das Produkt auf einem Computer läuft.

## FIG 1

## FIG 2

## FIG 3

FIG 4

FIG 5

## FIG 6

## FIG 7

## FIG 8

## FIG 9

## FIG 10

## FIG 11

## FIG 12

FIG 13

Europäisches
Patentamt

European
Patent Office

Office européen
des brevets

# EUROPÄISCHER RECHERCHENBERICHT

**Nummer der Anmeldung**

EP 18 18 2567

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2013 218228 A1 (FRAUNHOFER GES ZUR FÖRDERUNG DER ANGEWANDTEN FORSCHUNG E V [DE]) 12. März 2015 (2015-03-12) <br> * Abbildungen 1, 2, 4, 5, 6, 7 * <br> * Absatz [0041] * <br> * Absatz [0084] - Absatz [0085] * <br> * Absatz [0100] * <br> * Absatz [0103] * <br> * Absatz [0108] - Absatz [0112] * <br> * Absatz [0189] * <br> ----- | 1,3, 5-10,12, 14-18 | INV. H02M3/158 <br><br> ADD. H02M1/00 |
| X | DE 10 2017 110315 A1 (INFINEON TECHNOLOGIES AUSTRIA AG [AT]) 16. November 2017 (2017-11-16) <br> * Abbildungen 2, 4, 6, 7, 8 * <br> * Absatz [0005] * <br> * Absatz [0007] - Absatz [0009] * <br> * Absatz [0041] * <br> * Absatz [0045] - Absatz [0049] * <br> * Absatz [0059] - Absatz [0064] * <br> ----- | 1-18 | |

**RECHERCHIERTE SACHGEBIETE (IPC)**

H02M

Der vorliegende Recherchenbericht wurde für alle Patentansprüche erstellt

| Recherchenort | Abschlußdatum der Recherche | Prüfer |
|---|---|---|
| Den Haag | 17. Januar 2019 | Madouroglou, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 18 2567

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2019

| Im Recherchenbericht angeführtes Patentdokument | Datum der Veröffentlichung | Mitglied(er) der Patentfamilie | Datum der Veröffentlichung |
|---|---|---|---|
| DE 102013218228 A1 | 12-03-2015 | DE 102013218228 A1<br>EP     3028377 A1<br>US   2016190932 A1<br>WO   2015036422 A1 | 12-03-2015<br>08-06-2016<br>30-06-2016<br>19-03-2015 |
| DE 102017110315 A1 | 16-11-2017 | CN     107370373 A<br>DE 102017110315 A1<br>US     9806621 B1<br>US   2018034375 A1 | 21-11-2017<br>16-11-2017<br>31-10-2017<br>01-02-2018 |

EPO FORM P0461

Für nähere Einzelheiten zu diesem Anhang : siehe Amtsblatt des Europäischen Patentamts, Nr.12/82